# FASCICULE DE BREVET EUROPEEN

(11) **EP 1 007 319 B1**
(45) Date de publication et mention de la délivrance du brevet: **29.05.2002**
(21) Numéro de dépôt: 98903095.2
(22) Date de dépôt: 20.01.1998
(51) Int. Cl.: B29C 45/27, B29C 45/46, B29C 45/20

(54) **SYSTEME D'INJECTION DE MATIERE COMPOSITE A L'INTERIEUR D'UN MOULE DE CONFORMATION**
SYSTEM ZUM SPRIZGIESSEN EINES VERBUNDWERKSTOFFES IN EINER FORMGEBUNGSFORM
SYSTEM FOR INJECTING COMPOSITE SUBSTANCE INSIDE A FORMING MOULD

(30) Priorité: 13.02.1997 FR 9701912
(43) Date de publication de la demande: 14.06.2000
(73) Titulaire: Inoplast, 07340 Saint Desirat (FR)
(72) Inventeur: BOSG, Patrick, F-26240 Saint Barthélémy de Vals (FR); VERGNE, Laurent, F-26600 Larnage (FR)
(74) Mandataire: Myon, Gérard Jean-Pierre
(86) Numéro de dépôt international: FR9800101
(87) Numéro de publication internationale: WO9835810

(56) Documents cités:
- FR-A- 2 425 318
- FR-A- 2 629 388
- US-A- 4 268 241
- US-A- 5 540 580
- PATENT ABSTRACTS OF JAPAN vol. 97, no. 3, 31 mars 1997 & JP 08 309821 A (JAPAN STEEL WORKS LTD:THE), 26 novembre 1996,
- MAERTENS W: "SYSTEME D'INJECTION BMC "INOROC"" COMPOSITES, vol. 31, no. 3, mai 1991 - juin 1991, PARIS FR, pages 342-346, XP000290305

## Description

L'invention a trait à un système d'injection de matière composite à l'intérieur d'un moule de conformation.

Une matière de moulage composite comprend généralement une résine et des fibres de renfort ou de charge appropriées. Par la demande de brevet FR-A-2 629 388, on connaît un appareillage pour l'injection de matière composite à l'intérieur d'un moule de conformation comprenant un ou plusieurs doseurs, du type à piston mobile, reliés à un dispositif commun d'alimentation, également du type à piston, chaque doseur étant associé à un dispositif d'injection monté sur le moule. Ce dispositif est efficace pour le moulage de matières composites comprenant une résine thermodurcissable.

Cependant, les résines thermodurcissables ont une densité relativement importante, de l'ordre de 1,4 à 1,9, et ne permettent en général pas d'assembler les pièces réalisées par une simple coopération de forme, c'est-à-dire par encliquetage ou clipsage. Or, un tel clipsage peut être souhaitable pour des éléments de carrosserie ou de structure d'un véhicule automobile, tels qu'une calandre, une aile ou un habillage intérieur ou extérieur. On a donc envisagé d'utiliser des résines thermoplastiques dont la densité est moindre et qui permettent une fixation des pièces par déformation élastique.

Une contrainte des résines thermoplastiques réside dans le fait qu'elles doivent être injectées dans le moule de conformation à une température de l'ordre de 220 à 290°C, la pression de moulage étant de l'ordre de 300 à 350 bars. Ces valeurs sont sensiblement supérieures aux valeurs correspondantes pour les résines thermodurcissables qui sont respectivement de 170°C environ et de 100 à 250 bars.

D'autre part, en fonction de la géométrie de la pièce à mouler, il est parfois nécessaire que le dispositif d'injection soit installé sur une partie mobile du moule afin que la trace éventuellement laissée sur la pièce finie au niveau du point d'injection soit située dans une partie masquée de la pièce une fois celle-ci montée. Il est alors nécessaire de prévoir un système d'alimentation en composé de moulage de l'injecteur qui permette les mouvements de celui-ci dus aux mouvements du moule. On a pu envisager d'installer dans le dispositif connu de FR-2 629 388 une conduite flexible entre le dispositif de dosage et le dispositif d'injection.

Cependant, une telle conduite flexible devrait être réalisée avec un tuyau armé qui est particulièrement onéreux. De plus, la géométrie de la conduite varierait en fonction de la position de la partie mobile du moule, de sorte que les pertes de charges induites par cette conduite seraient importantes et variables. De plus, la technologie connue ne permet pas d'utiliser des tuyaux flexibles de grand diamètre aux pressions envisagées, de sorte que les pertes de charge induites dans une ligne flexible sont importantes. Il est alors nécessaire que le dispositif commun d'alimentation travaille à très haute pression pour atteindre, au niveau de l'empreinte du moule, les 300 à 350 bars nécessaires lors du moulage d'une résine thermoplastique.

En outre, une ligne flexible comprend nécessairement deux raccords permettant de la connecter à ses deux extrémités à un circuit fluide . Ces raccords présentent nécessairement une diminution du diamètre interne par rapport à celui de la conduite flexible, ce qui induit des pertes de charge supplémentaires, elles aussi inadmissibles.

Par ailleurs, un des intérêts principaux des matières composites à base de résines thermoplastiques est qu'elles peuvent contenir des fibres relativement longues, c'est-à-dire dont la longueur peut excéder 20 mm. Or, dans un système muni d'une conduite flexible, les fibres longues risquent d'être brisées au passage des raccords. Enfin, quelles que soient les précautions prises au niveau des dispositifs d'alimentation ou de dosage, la température de la matière à injecter ne peut pas être contrôlée lorsqu'elle transite dans la conduite flexible, celle-ci pouvant atteindre plusieurs mètres de longueur, de sorte que des échanges thermiques conduisent à la diminution de la température de la matière composite, ce qui influe négativement sur sa fluidité et ses propriétés de moulage.

US-A-5,540,580 décrit un système d'injection de matière plastique non chargée pourvue d'une ligne d'alimentation formée de sections articulées. Le contrôle en température de la matière dans cette ligne est prévu au moyen de systèmes impliquant un diamètre interne faible de la ligne, d'où des pertes de charge importantes.

L'invention vise à résoudre ces problèmes et à proposer un système d'injection de matière composite capable de fonctionner avec des résines thermoplastiques ou des résines thermodurcissables, y compris dans le cas où l'injecteur est placé sur une partie mobile du moule.

Dans cet esprit, l'invention concerne un système d'injection de matière composite à l'intérieur d'un moule de conformation, ledit système comprenant un dispositif d'alimentation équipé d'un piston, au moins un dispositif de dosage également équipé d'un piston et au moins une ligne d'alimentation du moule en matière composite, caractérisé en ce que ladite ligne est à section interne sensiblement constante et formée de sections de tubes articulées, lesdits tubes étant à double enveloppe, de façon à permettre la circulation d'un fluide caloporteur.

Grâce à l'invention, les pertes de charges induites dans la ligne formée de sections de tubes articulées peuvent être déterminées avec une bonne précision, notamment par le calcul, et demeurent sensiblement constantes quelle que soit la position de cette ligne articulée. En effet, les tubes conservent une géométrie constante globalement rectiligne quelles que soient leurs positions relatives. De plus, la circulation d'un fluide caloporteur permet de maintenir la matière composite injectée à une température adaptée au procédé de moulage, y compris lorsque la ligne articulée a une longueur de plusieurs mètres. Enfin, la ligne formée de sections de tubes articulées ne comprend pas de raccord à section intérieure réduite par rapport au reste de la ligne, de sorte que les fibres comprises dans la matière à injecter ne risquent pas d'être brisées au passage de tels raccords. La section interne sensiblement constante de la ligne garantit qu'aucun cisaillement des fibres n'a lieu lors des mouvments de la ligne articulée.

Selon un premier aspect avantageux de l'invention, la ligne formée de sections de tubes articulées comprend au moins un raccord tournant apte à résister à des pressions de fluide de l'ordre de 350 bars. L'utilisation d'un raccord tournant permet d'obtenir un degré de liberté nécessaire à la fonction d'articulation de la ligne sans influer négativement sur les pertes de charge induites par celle-ci. Dans ce cas et selon un autre aspect avantageux de l'invention, le raccord tournant comprend un manchon mâle pénétrant dans un manchon femelle, ces manchons définissant entre eux un interstice garni de billes et étant chacun associé avec un coude. Cette construction garantit que le raccord tournant résiste aux pressions souhaitées et permet l'articulation de la ligne du système de l'invention.

Selon un autre aspect avantageux de l'invention, la section interne de la ligne formée de sections de tubes est sensiblement constante. Ceci permet de maintenir les pertes de charge induites à un niveau minimum.

Selon un premier mode de réalisation de l'invention, la ligne formée de sections de tubes est intercalée entre le dispositif de dosage et le moule. Selon un second mode de réalisation de l'invention, la ligne formée de sections de tubes est intercalée entre le dispositif d'alimentation et le dispositif de dosage. Dans ce cas, on peut prévoir que le dispositif de dosage est fixé sur une partie mobile du moule. Il forme ainsi avec le dispositif d'injection un ensemble compact à l'intérieur duquel les pertes de charge et les variations de température peuvent être optimisées à leurs valeurs minimales.

Selon un autre aspect avantageux de l'invention, le système comprend au moins un injecteur monté dans le moule, cet injecteur comprenant un espace de circulation de fluide caloporteur jusqu'à proximité immédiate du débouché de l'injecteur. Cet aspect de l'invention permet de contrôler la température de la matière composite injectée jusqu'à son introduction dans le moule.

Selon un autre aspect avantageux de l'invention, un raccord thermique est placé autour de l'injecteur dans le moule. Cet aspect de l'invention permet de maintenir la matière à injecter à une température différente de celle du moule jusqu'à son point d'injection dans le moule.

Selon un autre aspect avantageux de l'invention, le dispositif d'alimentation et/ou le dispositif de dosage et/ou le dispositif d'injection sont à double enveloppe de façon à permettre la circulation d'un fluide caloporteur. Cet aspect de l'invention permet ainsi, en coopération avec la ligne formée de tubes à double enveloppe, de contrôler la température de la matière à injecter tout au long de la ligne d'injection.

L'invention sera mieux comprise et d'autres avantages de celle-ci apparaîtront plus clairement à la lumière de la description qui va suivre de deux modes de réalisation d'un système d'injection de matière composite conforme à son principe, donnée uniquement à titre d'exemple et faite en référence aux dessins annexés dans lesquels :
- la figure 1 est un schéma de principe d'un système d'injection de matière composite conforme à un premier mode de réalisation de l'invention ;
- la figure 2 est une coupe transversale d'un raccord tournant et de l'extrémité de deux tubes appartenant au dispositif de la figure 1 ;
- la figure 3 est une vue en coupe de la partie terminale d'un dispositif d'injection utilisé avec le système de la figure 1 et
- la figure 4 est une vue analogue à la figure 1 pour un système conforme à un second mode de réalisation de l'invention.

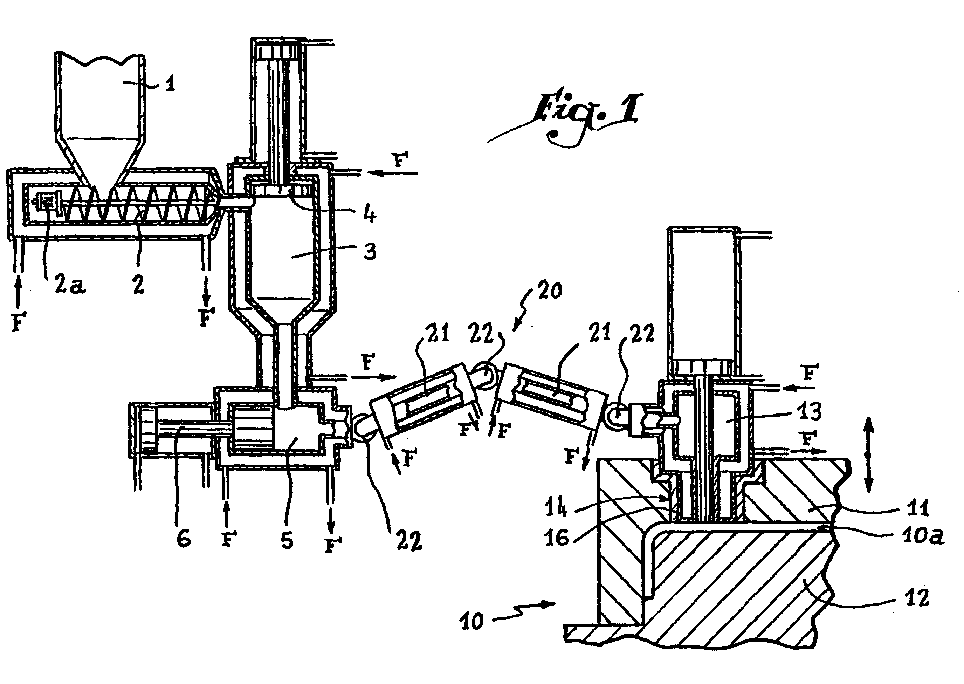

Le système d'injection de matière composite représenté à la figure 1 comprend un réservoir 1 dans lequel est stocké, de façon temporaire, une matière composite qui peut être réalisée à partir de résine thermodurcissable telle que du polyester, du vinylester ou une résine phénolique ou de résine thermoplastique, telle qu'une résine appartenant à la famille des polyoléifines. Cette résine peut être chargée en fibres de renfort à base de verre, de carbone ou de tout autre matériau adapté. Une vis d'Archimède 2 est disposée au pied du réservoir 1 et commandée par un moteur 2a afin de convoyer la matière à injecter jusqu'à un dispositif d'alimentation 3 muni d'un piston 4 de bourrage. A la sortie du dispositif d'alimentation 3 est raccordé un dispositif de dosage 5 également équipé d'un piston 6, les pistons 4 et 6 sont déplacés au moyen de dispositifs électriques ou pneumatiques connus de l'homme du métier, leur position pouvant être détectée au moyen de codeurs ou de tout autre moyen équivalent.

La matière est injectée dans un moule 10 formé essentiellement d'une matrice mobile 11 et d'un poinçon fixe 12. La matrice 11 est périodiquement écartée du poinçon 12 afin de permettre le retrait des pièces moulées. Un dispositif d'injection 13 est raccordé avec le volume intérieur 10a du moule grâce à un perçage 14 ménagé dans la matrice 11. Le dispositif d'injection peut être de tout type connu et, notamment, conforme à l'enseignement technique de EP-A-0 606 037.

Conformément à l'invention, entre le dispositif de dosage 5 et le dispositif d'injection 13 est insérée une ligne 20 formée de sections de tubes 21 reliées entre elles par des raccords tournants 22. Les tubes 21 sont à double enveloppe, de sorte que la circulation d'un liquide caloporteur tel qu'une huile à base de mélange d'alkylbenzènes synthétiques peut être mise en oeuvre, comme cela est représenté par les flèches F. L'huile à base d'alkylbenzènes synthétiques a la propriété remarquable de supporter des températures élevées, de l'ordre de 290°C, sans dégradation notable. De la même manière, on peut prévoir que la vis d'Archimède 2, le dispositif d'alimentation 3, le dispositif de dosage 5 et/ou le dispositif d'injection 13 sont équipés d'une double enveloppe de façon à permettre la circulation d'un fluide caloporteur, ceci étant également représenté par les flèches F à la figure 1. Le fluide caloporteur peut être le même que celui précédemment décrit, auquel cas un circuit commun d'alimentation en fluide caloporteur peut être prévu ; il peut aussi s'agir d'un autre fluide caloporteur, ce qui permet de maintenir ces différentes enceintes à des températures différentes les unes des autres.

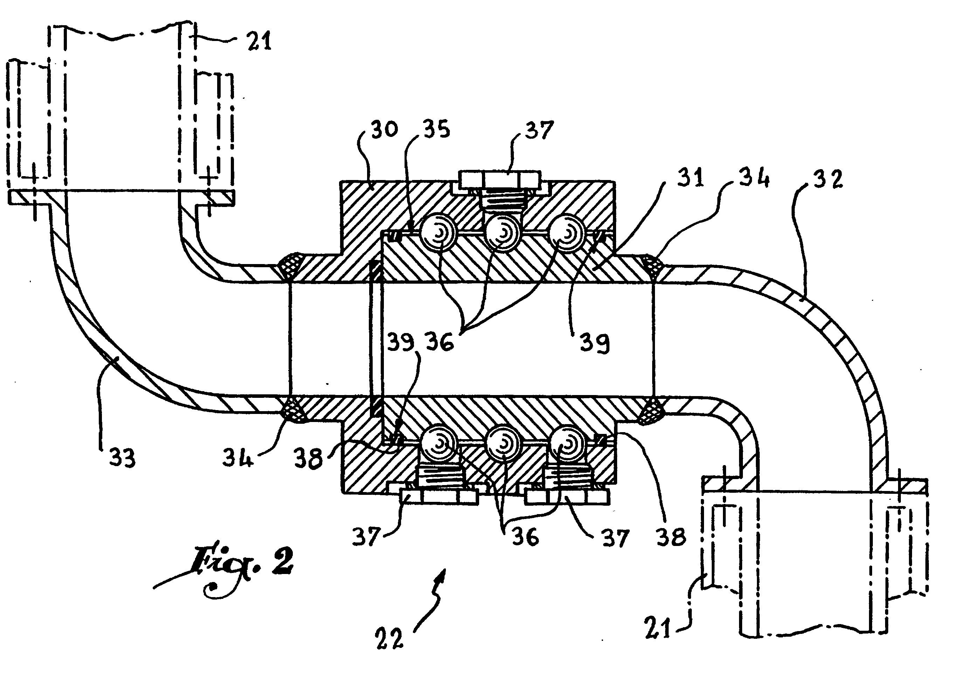

Les raccords tournants 22 servant d'articulation sont aptes à résister à des pressions de fluide de l'ordre de 350 bars. Pour ce faire et comme il apparaît plus clairement à la figure 2, ils comprennent un manchon mâle 30 et un manchon femelle 31 sur lesquels sont respectivement fixés deux coudes 32 et 33, ces coudes étant eux-mêmes raccordés à deux tubes 21. Les coudes 32 et 33 sont soudés sur les manchons 30 et 31, les cordons de soudures apparaissant avec les références 34. Une jonction par soudure permet à cet assemblage de résister à des pressions importantes. Un interstice 35 est ménagé entre les manchons 30 et 31, il définit des gorges circulaires dans lesquelles peuvent être insérées des billes 36 au moyen d'ouvertures fermées par des bouchons 37. Des joints toriques 38 sont disposés dans des gorges 39 du manchon mâle 30, à proximité des extrémités de l'interstice 35. Ce raccord tournant permet donc un mouvement relatif de deux tubes 21 dans le plan de la figure 1. On note que la section interne des tubes 21, des coudes 32 et 33 et des manchons 30 et 31 est sensiblement constante, de sorte que la présence des raccords tournants 22 dans la ligne formée entre le dispositif de dosage 6 et le dispositif d'injection 13 n'induit pas de pertes de charge spécifiques, ce qui est essentiel aux pressions d'utilisation considérées. De plus, les fibres contenues dans la matière composite ne risquent pas d'être brisées au passage de ces raccords tournants.

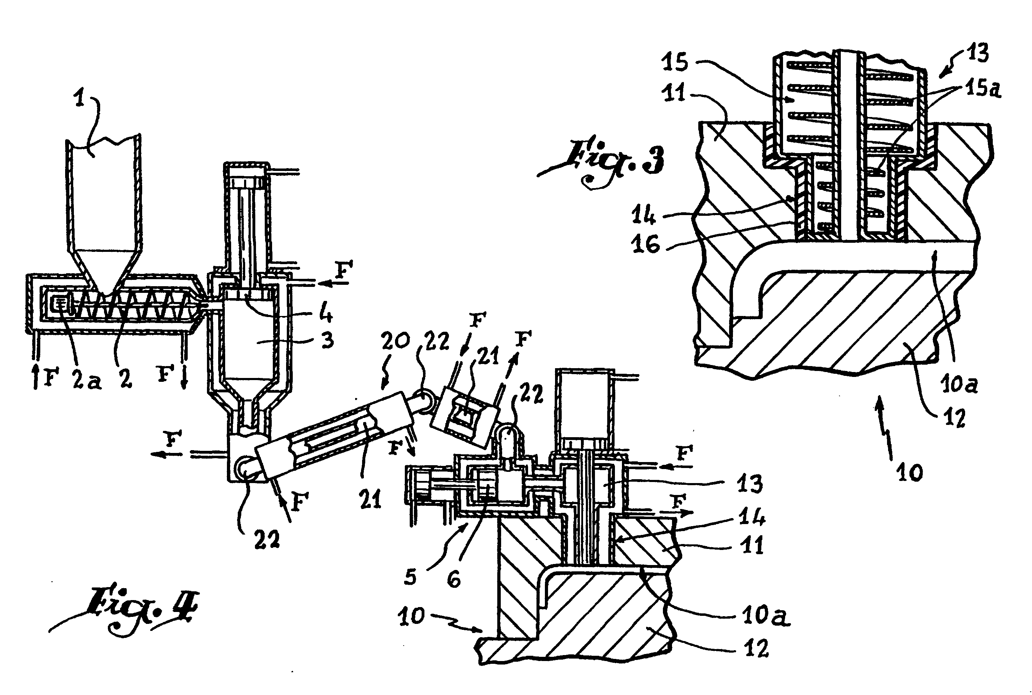

Le dispositif d'injection ou injecteur, représenté partiellement à plus grande échelle à la figure 3, est monté sur la matrice mobile 11. Dans sa partie terminale, il comprend un espace 15 de circulation d'un fluide caloporteur tel que l'huile précédemment évoquée. Cet espace 15 peut être muni d'ailettes ou de nervures internes 15a destinées à favoriser le guidage du liquide caloporteur jusqu'à proximité immédiate du débouché 13a de l'injecteur 13 ainsi que les échanges thermiques. Ces nervures 15a peuvent notamment avoir une forme hélicoïdale. Ainsi, la température de la matière composite à injecter peut être contrôlée jusqu'à son point d'injection dans le volume intérieur 10a du moule 10. Ceci est particulièrement intéressant dans le cas où on utilise une matière composite à base de résine thermoplastique dans la mesure où le moule 10 est maintenu à une température de l'ordre de 70° alors que la matière thermoplastique est injectée à une température de l'ordre de 250°C. Le liquide caloporteur présent dans l'espace 15 permet donc de chauffer la résine thermoplastique.

Dans le cas de l'utilisation du dispositif de l'invention avec une résine thermodurcissable, le moule est chauffé à une température de l'ordre de 170°C alors que la résine est injectée avec une température de l'ordre de 70°C. Dans ce cas, la circulation du liquide caloporteur dans l'espace 15 permet de refroidir la matière avant son injection dans le volume 10a.

Afin de faciliter le maintien de la matière à injecter à une température différente de celle du moule, on peut également prévoir qu'un raccord d'isolation thermique 16 est placé autour de l'injecteur 13 dans la matrice 11, de sorte qu'il limite les échanges thermiques entre l'injecteur 13 et le moule 10.

Dans le second mode de réalisation de l'invention représenté à la figure 4, les éléments analogues à ceux du mode de réalisation des figures 1 à 3 portent des références identiques. Ce mode de réalisation diffère du précédent essentiellement en ce que le dispositif de dosage 5 est installé sur la matrice mobile 11 du moule 10, de sorte que la circulation de matière composite à injecter entre le dispositif de dosage 5 et l'injecteur 13 a lieu sur une distance minimale. Ceci contribue à une meilleure précision du dosage. Dans ce cas, la ligne 20 formée de sections de tubes 21 est intercalée entre le dispositif d'alimentation 3 et le dispositif de dosage 5. Elle remplit la même fonction que précédemment en permettant les mouvements relatifs de la matrice 11 par rapport au poinçon 10 sans induire de pertes de charge inadmissibles ou des variations de température non compatibles avec le procédé mis en oeuvre.

Quel que soit le mode de réalisation de l'invention, plusieurs dispositifs de dosage 5 peuvent être associés avec un unique dispositif d'alimentation 3 commun. Plusieurs lignes 20 sont alors utilisées en parallèle.

## Revendications

1. Système d'injection de matière composite à l'intérieur d'un moule (10) de conformation, ledit système comprenant un dispositif d'alimentation (3) équipé d'un piston (4) au moins un dispositif de dosage (5) également équipé d'un piston (6) et au moins une ligne d'alimentation dudit moule en matière composite, **caractérisé en ce que** ladite ligne (20) est à section interne sensiblement constante et formée de sections de tubes (21) articulées, lesdits tubes étant à double enveloppe, de façon à permettre la circulation (F) d'un fluide caloporteur.

2. Système d'injection selon la revendication 1, **caractérisé en ce que** ladite ligne (20) formée de sections de tubes (21) articulées comprend au moins un raccord tournant (22) apte à résister à des pressions de fluide de l'ordre de 350 bars.

3. Système d'injection selon la revendication 2, **caractérisé en ce que** ledit raccord tournant (22) comprend un manchon mâle (31) pénétrant dans un manchon femelle (30), lesdits manchons définissant entre eux un interstice (35) garni de billes (36) et étant chacun associé avec un coude (32, 33).

4. Système d'injection selon l'une des revendications précédentes, **caractérisé en ce que** ledit fluide caloporteur est une huile à base de mélange d'alkylbenzènes synthétiques.

5. Système d'injection selon la revendication 1, **caractérisé en ce que** ladite ligne (20) formée de sections de tubes (21) est intercalée entre ledit dispositif de dosage (5) et ledit moule (10).

6. Système d'injection selon la revendication 1, **caractérisé en ce que** ladite ligne (20) formée de sections de tubes (21) est intercalée entre ledit dispositif d'alimentation (3) et ledit dispositif de dosage (5).

7. Système d'injection selon la revendication 6, **caractérisé en ce que** ledit dispositif de dosage (5) est fixé sur une partie mobile (11) dudit moule (10).

8. Système d'injection selon l'une des revendications précédentes, **caractérisé en ce qu'**il comprend au moins un injecteur (13) monté dans ledit moule (10), ledit injecteur comprenant un espace (15) de circulation de fluide caloporteur jusqu'à proximité immédiate du débouché (13a) dudit injecteur.

9. Système d'injection selon la revendication 8, **caractérisé en ce qu'**un raccord (16) d'isolation thermique est placé autour dudit injecteur (13) dans ledit moule (10).

10. Système d'injection selon l'une des revendications précédentes, **caractérisé en ce que** ledit dispositif d'alimentation (3) et/ou ledit dispositif de dosage (5) et/ou un dispositif d'injection (13) sont à double enveloppe de façon à permettre la circulation d'un fluide caloporteur.

## Patentansprüche

1. System zum Einspritzen von Verbundmaterial in das Innere einer gestaltgebenden Gießform (10), wobei das besagte System eine Zuführungsvorrichtung (3), die mit einem Kolben (4) ausgerüstet ist, wenigstens eine Dosierungsvorrichtung (5), die ebenfalls mit einem Kolben (6) ausgerüstet ist, und wenigstens eine Anlage zur Beschickung der besagten Gießform mit Verbundmaterial umfasst, **dadurch gekennzeichnet, dass** die besagte Anlage (20) einen im Wesentlichen konstanten Innenquerschnitt hat und aus Rohrsegmenten (21) besteht, die durch Gelenke miteinander verbunden sind, und die besagten Rohre eine doppelte Wandung haben, so dass die Zirkulation (F) eines Wärme übertragenden Fluids möglich ist.

2. System zum Einspritzen nach Anspruch 1, **dadurch gekennzeichnet, dass** die besagte Anlage (20) aus Rohrsegmenten (21) besteht, die durch Gelenke miteinander verbunden sind, und wenigstens einen drehbaren Anschluss (22) umfasst, der in der Lage ist, einem Druck des Fluids in der Größenordnung von 350 bar standzuhalten.

3. System zum Einspritzen nach Anspruch 2, **dadurch gekennzeichnet, dass** der besagte drehbare Anschluss (22) eine männliche Muffe (31) umfasst, die in eine weibliche Muffe (30) eingreift, wobei die besagten Muffen zwischen sich einen Spalt (35) festlegen, der mit kleinen Kugeln (36) bestückt ist, und jede Muffe mit einem Rohrkrümmer (32, 33) verbunden ist.

4. System zum Einspritzen nach einem der vorherigen Ansprüche, **dadurch gekennzeichnet, dass** das besagte Wärme übertragende Fluid ein Öl auf der Grundlage eines Gemischs aus synthetischen Alkylbenzolen ist.

5. System zum Einspritzen nach Anspruch 1, **dadurch gekennzeichnet, dass** die besagte Anlage (20), welche aus Rohrsegmenten (21) besteht, zwischen der besagten Dosierungsvorrichtung (5) und der besagten Gießform (10) montiert ist.

6. System zum Einspritzen nach Anspruch 1, **dadurch gekennzeichnet, dass** die besagte Anlage (20), welche aus Rohrsegmenten (21) besteht, zwischen der besagten Zuführungsvorrichtung (3) und der besagten Dosierungsvorrichtung (5) montiert ist.

7. System zum Einspritzen nach Anspruch 6, **dadurch gekennzeichnet, dass** die besagte Dosierungsvorrichtung (5) auf einem beweglichen Teil (11) der besagten Gießform (10) befestigt ist.

8. System zum Einspritzen nach einem der vorherigen Ansprüche, **dadurch gekennzeichnet, dass** es wenigstens eine Einspritzdüse (13) umfasst, die in der besagten Gießform (10) montiert ist, wobei die besagte Einspritzdüse einen Raum (15) zur Zirkulation des Wärme übertragenden Fluids bis in die unmittelbare Nähe der Öffnung (13a) der besagten Einspritzdüse umfasst.

9. System zum Einspritzen nach Anspruch 8, **dadurch gekennzeichnet, dass** ein Wärme dämmender Anschluss (16) um die besagte Einspritzdüse (13) in der besagten Gießform (10) platziert wird.

10. System zum Einspritzen nach einem der vorherigen Ansprüche, **dadurch gekennzeichnet, dass** die besagte Zuführungsvorrichtung (3) und/oder die besagte Dosierungsvorrichtung (5) und/oder eine Einspritzvorrichtung (13) eine doppelte Wandung haben, so dass die Zirkulation eines Wärme übertragenden Fluids möglich ist.

## Claims

1. System for injecting composite material inside a shaping mould (10), said system comprising a supply device (3) provided with a piston (4), at least one metering device (5), also provided with a piston (6), and at least one line for supplying said mould with composite material, **characterised in that** said line (20) has a substantially constant internal cross-section and is formed from sections of connected tubes (21), said tubes having a double skin so as to permit a heat-carrying fluid to circulate (F).

2. Injection system according to claim 1, **characterised in that** said line (20), formed from sections of connected tubes (21), comprises at least one rotating connection (22) capable of resisting fluid pressures in the order of 350 bars.

3. Injection system according to claim 2, **characterised in that** said rotating connection (22) comprises a male sleeve (31) which penetrates into a female sleeve (30), said sleeves defining therebetween an interstice (35) provided with ball bearings (36), and each sleeve being associated with a bent portion (32, 33).

4. Injection system according to one of the preceding claims, **characterised in that** said heat-carrying fluid is an oil based on a mixture of synthetic alkyl benzenes.

5. Injection system according to claim 1, **characterised in that** said line (20), formed from sections of tubes (21), is inserted between said metering device (5) and said mould (10).

6. Injection system according to claim 1, **characterised in that** said line (20), formed from sections of tubes (21), is inserted between said supply device (3) and said metering device (5).

7. Injection system according to claim 6, **characterised in that** said metering device (5) is secured on a displaceable portion (11) of said mould (10).

8. Injection system according to one of the preceding claims, **characterised in that** it comprises at least one injector (13) mounted in said mould (10), said injector comprising a space (15) for the heat-carrying fluid to circulate as far as the immediate proximity of the outlet (13a) of said injector.

9. Injection system according to claim 8, **characterised in that** a thermal insulation connection (16) is placed around said injector (13) in said mould (10).

10. Injection system according to one of the preceding claims, **characterised in that** said supply device (3) and/or said metering device (5) and/or an injection device (13) have/has a double skin so as to permit a heat-carrying fluid to circulate.
